# EUROPÄISCHE PATENTSCHRIFT

(11) **EP 0 463 515 B1**
(45) Veröffentlichungstag und Bekanntmachung des Hinweises auf die Patenterteilung: **27.11.1996**
(21) Anmeldenummer: 91109810.1
(22) Anmeldetag: 14.06.1991
(51) Int. Cl.: B65D 85/672, B65D 19/12

(54) **Wiederverwendbare Transport- und Verpackungseinrichtung**
Reusable transport and packaging device
Dispositif de transport et d'emballage réutilisable

(30) Priorität: 22.06.1990 DE 9006966 U
(43) Veröffentlichungstag der Anmeldung: 02.01.1992
(73) Patentinhaber: HOECHST AKTIENGESELLSCHAFT, 65926 Frankfurt am Main (DE)
(72) Erfinder: Gleffe, Klaus, W-6204 Taunusstein-Wehen (DE); Reichert, Helmut, W-6222 Geisenheim-Johannisberg (DE); Heusel, Thomas, W-6200 Wiesbaden (DE)

(56) Entgegenhaltungen:
- EP-A- 0 029 750
- DE-U- 8 326 343
- US-A- 2 956 763

## Beschreibung

Die vorliegende Erfindung betrifft eine wiederverwendbare Transport- und Verpackungseinrichtung für den schonenden Transport von mechanisch empfindlichem Rollengut mit einem rechteckigen Basisrahmen und an Querseiten des Basisrahmens angelenkten Stützrahmen, die H-förmige Elemente aus zwei durch eine Querstrebe starr miteinander verbundenen Streben sind, die um 90° aus einer Stellung parallel oberhalb des Basisrahmens in eine senkrechte Stellung verschwenkbar sind.

Eine derartige Transport- und Verpackungseinrichtung ist aus der GB-A - 1.299.219 bekannt, wobei die H-förmigen Stützrahmen mit ihren Streben direkt an Beinteilen angelenkt sind, die durch die Ecken des Basisrahmens hindurchgehen. Die Längen der Längsseiten der Streben können höchstens gleich der halben Länge des Basisrahmens sein.

Aus der DE-C - 38 08 064 sind bereits Transport- und Verpackungshilfen bekannt, bei denen mit Hilfe sogenannter Stirnwände zylindrische Packgüter, z. B. maschinell hergestellte Rollen aus flächenhafter Ware, wie Papier, Gewebe oder Folien aus Metall oder Kunststoff, in eine mehr oder weniger handhabbare bzw. stapelbare Form gebracht werden, um den Transport vom Hersteller zum Weiterverarbeiter ohne nennenswerte mechanische Beschädigungen zu überstehen. Diese Hilfsmittel erfüllen zwar ihren Einsatzzweck, stellen aber immer noch ein relativ großes Verpackungsmaterialvolumen dar, das nach dem einmaligen, mitunter auch mehrmaligen Gebrauch, weggeworfen wird und daher bei massenhaftem Anfall zu beträchtlichen Problemen bei der Beseitigung bzw. der Deponierung führt. Nach dem Willen der Hersteller und Anwender der Packgüter sollen diese Probleme durch den Wegfall oder die Wiederverwendbarkeit derartiger Verpackungsmaterialien gelöst werden.

Aus der US-A - 2,958,763 ist eine zusammenklappbare Transportpalette mit einem rechteckigen Basisrahmen und umklappbaren H-förmigen Seitenteilen bekannt, die an den Innenseiten von L-förmigen Gelenkteilen befestigt sind. Diese Gelenkteile sind paarweise an den Außenseiten von Längsseiten des Basisrahmens angelenkt, in einem Abstand gleich der Schenkellänge der L-förmigen Gelenkteile von den Ecken der Längsseiten. Im zusammengeklappten Zustand liegen die H-förmigen Seitenteile nicht vollflächig auf dem Basisrahmen auf, sondern befinden sich im Abstand des einen Schenkels der L-förmigen Gelenkteile oberhalb des Basisrahmens. Insofern ist diese Transportpalette im zusammengeklappten Zustand sperrig und nimmt noch ein verhältnismäßig großes Volumen ein.

Aus der DE-U - 83 26 343 ist eine Palette für den Transport und die Lagerung von Rollenware mit einem von vertikalen und horizontalen Streben gebildeten Aufbau bekannt. Der Aufbau ist mit in verschiedenen Höhen anbringbaren Tragstreben ausgerüstet, die eine Vielzahl von Achsaufnahmen aufweisen. Die Tragstreben erstrecken sich horizontal in Längs- und/oder Querrichtung und liegen einander gegenüber. Dabei weisen die Vertikalstreben des Aufbaus jeweils zwei vertikal angeordnete Reihen von unterschiedliche Höhen definierenden Halterungen auf, in die die Tragstreben einhängbar sind. Die Achsaufnahmen an den Tragstreben sind in Form einer Zahnleiste ausgebildet. Die Vertikalstreben sind mit dem rechteckigen Palettenboden fest verschweißt, so daß keine Möglichkeit besteht, das Volumen der Palette für Lagerungszwecke durch Umklappen der Vertikalstreben zu verkleinern.

Aufgabe der Erfindung ist es, eine wiederverwendbare Transport- und Verpackungseinrichtung zu schaffen, die mit möglichst kleinem Volumen gelagert und gestapelt werden kann und mit der Rollengut in Großformat schonend transportiert werden kann.

Diese Aufgabe wird durch eine wiederverwendbare Transport- und Verpackungseinrichtung nach dem Oberbegriff des Anspruchs 1 in der Weise gelöst, daß Halterungen auf den Querstreben der Stützrahmen zur lagefesten Fixierung des Rollenguts angebracht sind, daß bei horizontal umgeklappten Stützrahmen die Streben des einzelnen Stützrahmens eine Länge größer als die halbe Länge der Längsseiten des Basisrahmens und kleiner/gleich dem Abstand zwischen der Querseite des Basisrahmens und der Querstrebe des gegenüberliegenden Stützrahmens haben, daß eine erste und eine dazu diagonale dritte Strebe im Abstand von sich diagonal gegenüberliegenden Ecken des Basisrahmens an den Querseiten und eine zweite und eine dazu diagonale vierte Strebe an den weiteren, sich diagonal gegenüberliegenden Ecken angelenkt sind und daß die horizontal umgeklappten Stützrahmen mit ihren Streben auf den Längsseiten bzw. einer Querstrebe des Basisrahmens aufliegen.

In Weiterbildung der Erfindung sind an der Unterseite des Basisrahmens Abstandshalter angeordnet, deren Höhe so gewählt ist, daß die Transport- und Verpackungseinrichtung ähnlich wie eine Transportpalette mit einem Unterflurfahrzeug anhebbar ist. Der Basisrahmen, die Stützrahmen und die Abstandshalter bestehen aus einem formstabilen Material, wie Metall, das gegen mechanische Einwirkungen unempfindlich ist.

In weiterer Ausgestaltung der Erfindung sind die im Abstand zu den sich diagonal gegenüberliegenden Ecken des Basisrahmens angeordneten Streben der Stützrahmen gegeneinander seitlich um Überstände so versetzt, daß die Stützrahmen horizontal zusammenklappbar sind, ohne sich zu berühren. Dabei ist die eine Strebe des einen Stützrahmens um den Überstand von der einen Längsseite des Basisrahmens eingerückt und die diagonal gegenüberliegende Strebe um den gleichen Überstand von der anderen Längsseite eingerückt.

Die weitere Ausgestaltung der Erfindung ergibt sich aus den Merkmalen der Ansprüche 6 bis 8.

Die Erfindung wird im folgenden anhand eines zeichnerisch dargestellten Ausführungsbeispiels näher erläutert.
- Figur 1: zeigt eine Transport- und Verpackungseinrichtung nach der Erfindung in perspektivischer Darstellung, und
- Figur 2: eine senkrechte Draufsicht auf eine Transport- und Verpackungseinrichtung im zusammengeklappten Zustand.

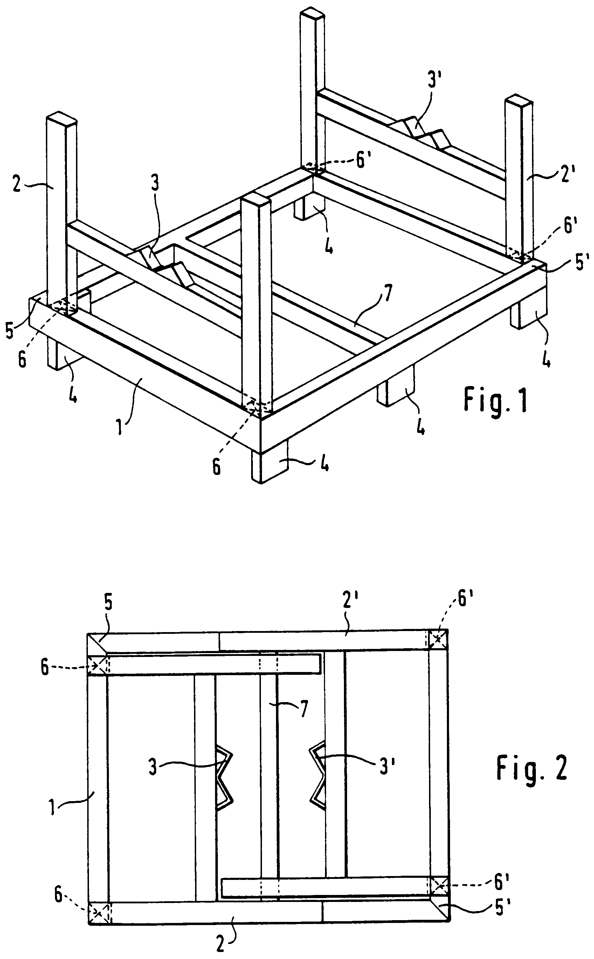

Im einzelnen ist in Figur 1 der Basisrahmen 1 zu erkennen, an dessen Querseiten die Stützrahmen 2 und 2' angeordnet sind, wobei Gelenke 6, 6', mit denen die Stützrahmen 2 und 2' mit dem Basisrahmen 1 verbunden sind, gestrichelt angedeutet sind. Des weiteren sind V-förmige Halterungen 3 und 3' erkennbar, die mittig im Bereich der Stützrahmen 2 und 2' auf Querstreben angeordnet sind. Figur 1 zeigt deutlich, daß die Stützrahmen 2 und 2' auf dem Basisrahmen 1 um Überstände 5 und 5' gegeneinander versetzt angeordnet sind, wobei die Überstände 5, 5' einander diagonal gegenüberliegen. Unterhalb des Basisrahmens 1 sind Abstandshalter 4 angebracht, damit die Transport- und Verpackungseinrichtung ähnlich wie eine Transportpalette mit geeigenten Hebemechanismen von Unterflurfahrzeugen leichter bewegt bzw. angehoben werden kann.

In Figur 2 beziehen sich prinzipiell gleiche Bezugsziffern auf gleiche Elemente wie in Figur 1. Zusätzlich sind in dieser Figur gut die Gelenke 6 und 6' erkennbar, über die Streben der Stützrahmen 2 und 2' mit dem Basisrahmen 1 verbunden sind. In dem zusammengeklappten Zustand der Transport- und Verpackungseinrichtung in Fig. 2 ist ersichtlich, daß die Abmessungen der Streben der Stützrahmen 2, 2' größer als die halbe Länge der Längsseiten des Basisrahmen sind und daß der Basisrahmen 1 durch zumindest eine Querstrebe 7 verstärkt ist. Fig. 2 zeigt auch klar erkennbar auf, daß die Streben eines Stützrahmens eine Länge kleiner/gleich dem Abstand Querseite des Basisrahmens zur Querstrebe des gegenüberliegenden Stützrahmens im horizontal zusammengeklappten Zustand der Stützrahmen haben. In der Außerbetriebsstellung sind die Stützrahmen 2, 2' auf den Basisrahmen 1 geklappt. In ihrer Arbeitsstellung sind die Stützrahmen 2, 2' um 90° hochgeklappt und stehen senkrecht auf dem Basisrahmen 1. Die Stützrahmen 2, 2', die Abstandshalter 4 und der Basisrahmen 1 bestehen aus einem formstabilen Material, beispielsweise einem Metall.

## Patentansprüche

1. Wiederverwendbare Transport- und Verpackungseinrichtung für den schonenden Transport von mechanisch empfindlichem Rollengut mit einem rechteckigen Basisrahmen (1) und an dessen Querseiten angelenkten Stützrahmen (2, 2'), die H-förmige Elemente aus zwei durch eine Querstrebe starr miteinander verbundenen Streben sind, die um 90° aus einer Stellung parallel oberhalb des Basisrahmens in eine senkrechte Stellung verschwenkbar sind, dadurch gekennzeichnet, daß Halterungen (3, 3') auf den Querstreben der Stützrahmen (2, 2') zur lagefesten Fixierung des Rollenguts angebracht sind, daß bei horizontal umgeklappten Stützrahmen die Streben des einzelnen Stützrahmens eine Länge größer als die halbe Länge der Längsseiten des Basisrahmens (1) und kleiner/gleich dem Abstand zwischen der Querseite des Basisrahmens und der Querstrebe des gegenüberliegenden Stützrahmens haben, daß eine erste und eine dazu diagonale dritte Strebe mit Abstand von sich diagonal gegenüberliegenden Ecken des Basisrahmens an den Querseiten und eine zweite und eine dazu diagonale vierte Strebe an den weiteren, sich diagonal gegenüberliegenden Ecken angelenkt sind und daß die horizontal umgeklappten Stützrahmen (2, 2') mit ihren Streben auf den Längsseiten bzw. einer Querstrebe (7) des Basisrahmens (1) aufliegen.

2. Transport- und Verpackungseinrichtung nach Anspruch 1, dadurch gekennzeichnet, daß an der Unterseite des Basisrahmens (1) Abstandshalter (4) angeordnet sind, deren Höhe so gewählt ist, daß die Einrichtung ähnlich wie eine Transportpalette mit einem Unterflurfahrzeug anhebbar ist.

3. Transport- und Verpackungseinrichtung nach den Ansprüchen 1 und 2, dadurch gekennzeichnet, daß der Basisrahmen (1), die Stützrahmen (2, 2') und die Abstandshalter (4) aus einem formstabilen Material wie Metall bestehen.

4. Transport- und Verpackungseinrichtung nach Anspruch 1, dadurch gekennzeichnet, daß die im Abstand zu den sich diagonal gegenüberliegenden Ecken des Basisrahmens (1) angeordneten Streben der Stützrahmen (2, 2') gegeneinander seitlich um Überstände (5, 5') so versetzt sind, daß die Stützrahmen horizontal zusammenklappbar sind, ohne sich zu berühren.

5. Transport- und Verpackungseinrichtung nach Anspruch 4, dadurch gekennzeichnet, daß die eine Strebe des einen Stützrahmens (2) um den Überstand (5) von der einen Längsseite des Basisrahmens (1) eingerückt ist und daß die diagonal gegenüberliegende Strebe des anderen Stützrahmens (2') um den gleichen Überstand (5') von der anderen Längsseite eingerückt ist.

6. Transport- und Verpackungseinrichtung nach Anspruch 1, dadurch gekennzeichent, daß die Halterungen (3, 3') in bezug auf die Querseiten des Basisrahmens (1) mittig angeordnet sind.

7. Transport- und Verpackungseinrichtung nach Anspruch 1, dadurch gekennzeichnet, daß sie als eine Einheit zur Aufnahme von zumindest einem Rollengut in Großrollenformat ausgebildet ist.

8. Transport- und Verpackungseinrichtung nach Anspruch 1, dadurch gekennzeichnet, daß die Querstrebe (7) des Basisrahmens (1) dessen Längsseiten zur Stabilitätserhöhung mittig und starr miteinander verbindet.

## Claims

1. A re-usable transport and packaging device for the careful transport of mechanically sensitive goods in the form of rolls, comprising a rectangular base frame (1) and supporting frames (2, 2') which are pivotally connected to the transverse sides of the base frame and which are H-shaped elements comprised of two longitudinal struts rigidly connected by a transverse strut, which can be pivoted through an angle of 90° from a position extending parallel above the base frame into a vertical position, characterized in that holding elements (3, 3') for the stationary mounting of the goods in the form of rolls are provided on the transverse struts of the supporting frames (2, 2'), that, when the supporting frames are pivoted into their horizontal position, the length of the struts of an individual supporting frame exceeds half the length of the longitudinal sides of the base frame (1) and is inferior/equal to the distance between the transverse side of the base frame and the transverse strut of the opposite supporting frame, that a first strut and a third strut, located diagonally opposite relative to said first strut, are pivotally fastened to the transverse sides of the base frame, at a certain distance from diagonally opposite corners thereof, that a second strut and a fourth strut, located diagonally opposite relative to said second strut, are pivotally fastened to the two other, diagonally opposite corners of the base frame, and that the struts of the supporting frames (2, 2') rest on the longitudinal sides and on one transverse strut (7) of the base frame (1), respectively, when said supporting frames are pivoted down horizontally.

2. The transport and packaging device as claimed in claim 1, characterized in that spacers (4) are located on the underside of the base frame (1), the length of these spacers being selected such that the device can be lifted by a fork stacker like a pallet.

3. The transport and packaging device as claimed in claims 1 and 2, characterized in that the base frame (1), the supporting frames (2, 2') and the spacers (4) are made of a dimensionally stable material, e.g., of metal.

4. The transport and packaging device as claimed in claim 1, characterized in that the struts of the supporting frames (2, 2'), which are provided opposite one another at the diagonally opposite edges of the base frame are mutually offset through diagonally opposing projecting ends (5, 5'), such that the supporting frames can be folded together horizontally without coming into mutual contact.

5. The transport and packaging device as claimed in claim 4, characterized in that one strut of one-supporting frame (2) is offset from one longitudinal side of the base frame- through a distance (5) and that the diagonally opposite strut of the other supporting frame (2') is offset from the other longitudinal side of the base frame through the same distance (5').

6. The transport and packaging device as claimed in claim 1, characterized in that the holding elements (3, 3') are arranged centrally relative to the transverse sides of the base frame (1).

7. The transport and packaging device as claimed in claim 1, characterized in that it is designed for receiving at least one full-width roll of material.

8. The transport and packaging device as claimed in claim 1, characterized in that the transverse strut (7) of the base frame (1) is centrally fixed to the longitudinal sides of the latter in order to increase the stability.

## Revendications

1. Dispositif de transport et d'emballage réutilisable pour le transport avec ménagement de marchandises mécaniquement sensibles en forme de rouleaux comprenant un châssis de base rectangulaire (1) et des cadres de support (2, 2') articulés sur des côtés transversaux du châssis de base, cadres de support qui sont des éléments en forme de H constitués de deux montants reliés entre eux par une traverse et qui peuvent être pivotés d'un angle de 90°à partir d'une position parallèle, au dessus du châssis de base à une position perpendiculaire, caractérisé en ce que, des dispositifs de fixation (3, 3') sont agencés sur les traverses des cadres de support (2, 2') pour fixer en position les marchandises en forme de rouleaux, en ce que dans le cas d'un cadre de support replié horizontalement, les montants de chaque cadre de support ont une longueur supérieure à la moitié de la longueur des côtés longitudinaux du châssis de base (1) et inférieure/égale à la distance entre le côté transversal du châssis de base et la traverse du cadre support opposé, en ce qu'un premier et un troisième montant diagonalement opposé au premier sont articulés avec un écartement par rapport aux côtés transversaux de coins situés diagonalement opposés du châssis de base, et le deuxième et le quatrième montant disposés diagonalement opposés sont articulés aux autres coins situés diagonalement opposés et en ce que les cadres support (2, 2') repliés horizontalement avec leurs montants reposent sur les côtés longitudinaux ou sur une traverse (7) du châssis de base (1).

2. Dispositif de transport et d'emballage selon la revendication 1, caractérisé en ce que des entretoises (4) sont agencées sur la face inférieure du châssis de base (1), entretoises dont la hauteur est choisie de manière à permettre au dispositif d'être soulevé comme une palette de transport au moyen d'un chariot élévateur à fourche.

3. Dispositif de transport et d'emballage selon les revendications 1 et 2, caractérisé en ce que le châssis de base (1), les cadres de support (2, 2') et les entretoises (4) sont réalisés en matériau stable en forme, tel qu'un métal.

4. Dispositif de transport et d'emballage selon la revendication 1, caractérisé en ce que les montants des cadres de support (2, 2'), disposés avec un écartement par rapport aux coins diagonalement opposés du châssis de base (1), sont décalés latéralement l'un par rapport à l'autre d'une portion en porte à faux (5, 5'), de manière a ce que les cadres de support puissent être repliés ensemble en une position horizontale sans se toucher.

5. Dispositif de transport et d'emballage selon la revendication 4, caractérisé en ce que l'un des montants de l'un des cadres de support (2) est en retrait de la portion en porte à faux (5) par rapport à un des côtés longitudinaux du châssis de base (1) et en ce que le montant diagonalement opposé de l'autre cadre de support (2') est décalé en retrait de la manière de la portion en porte à faux (5') par rapport à l'autre côté longitudinal.

6. Dispositif de transport et d'emballage selon la revendication 1, caractérisé en ce que les fixations (3, 3') sont centrées par rapport aux côtés transversaux du châssis de base (1).

7. Dispositif de transport et d'emballage selon la revendication 1, caractérisé en ce qu'il est conçu comme une unité de réception d'au moins un produit en forme de rouleau de grande taille.

8. Dispositif de transport et d'emballage selon la revendication 1, caractérisé en ce que la traverse (7) du châssis de base (1) relie les bords longitudinaux de celui-ci de manière centrale et rigide, l'un à l'autre, pour augmenter la stabilité.
